# EUROPEAN PATENT APPLICATION

(11) **EP 3 170 655 A1**
(43) Date of publication of application: **24.05.2017**
(21) Application number: 16205562.8
(22) Date of filing: 21.01.2011
(51) Int. Cl.: B31F 1/07, B32B 37/00, B32B 38/06, D21H 27/00

(54) **PAPER PRODUCT WITH THREE OR MORE PLIES AND METHOD FOR MANUFACTURING SAID PRODUCT**

(30) Priority: 28.01.2010 IT MI20100116
(62) Divisional of application: 11000487.6
(71) Applicant: Industrie Cartarie Tronchetti S.p.A., 55023 Borgo a Mozzano (Lucca) (IT)
(72) Inventor: NOFORI, Massimo, 55100 Lucca (IT)
(74) Representative: Mannucci, Michele

(57) **Abstract**

A method for manufacturing toilet paper, kitchen towels, napkins, handkerchiefs, tissue products in general, with at least three plies, by using two embossing and lamination assemblies of the pin-to-pin, nested, DERL, embossing-gluing type; the system according to the present invention is characterized by the addition of a second rubber embossing roller to the first embossing assembly, which acts on the two plies, an outer ply and a middle ply, with less pressure than the main rubber embossing roller, so that during the subsequent gluing step the two plies are already nested, preventing slippages.

## Description

The present invention relates to a paper product with three or more plies and to a method for manufacturing the paper product.

The present invention relates in particular to a system for manufacturing toilet paper, kitchen towels, napkins, handkerchiefs, and so-called "tissue" products in general.

Those products are generally manufactured by using embossing, a mechanical operation that consists in reproducing designs or patterns in relief on the surface of the paper.

Embossing is used essentially to decorate the products and most of all to improve their most important functional characteristics, such as softness, absorbing capacity and thickness.

Typically, a common tissue product, such as toilet paper or kitchen paper, is made of two or more plies of paper which are embossed separately and subsequently joined to each other by applying glue and laminating the plies between rollers that define a lamination nip.

Embossing is normally performed by passing the paper ply between a steel embossing roller provided with protrusions and a presser roller that is typically made of rubber.

In other cases, embossing is performed by means of two steel rollers, of which a first one is provided with protrusions that correspond to the recesses of the second roller.

It is known to manufacture those types of product with a smooth intermediate ply, a flat middle ply, which is arranged between two outer plies, which are embossed separately in order to form protrusions that extend inward, i.e. toward the middle ply.

The three plies are made to pass between two steel rollers, which press with a force that is sufficient to join them even without glue.

Such ply joining system causes early wear of the steel rollers, because the rollers are subjected to considerable stress.

According to another production method, the outer plies are joined to the flat middle ply by means of glue spots. The glue is applied to the middle ply before passing between the two steel rollers.

Due to slippages of the middle ply, such joining system can cause smudging of the gluing spots, which might be particularly evident when colored glue is used.

EP-A-1609589 discloses a method for manufacturing a multi-ply embossed and printed paper napkin. A first outer ply is embossed with a first set of protrusions and a second set of protrusions, the protrusions of the second set being higher than the protrusions of the first set. A second outer ply is embossed and bonded by gluing to the first ply at the level of the second set of protrusions. In one embodiment disclosed in the above mentioned prior art document a third intermediate smooth ply is also provided, which is sandwiched between the first outer ply and the second outer ply and is glued to the second set of protrusions.

US 2005/0103456 discloses a method for manufacturing a multi-ply paper web, comprising the steps of separately embossing three plies with a background embossing. A first ply and a second ply are subsequently decorated by passing them together through a decoration embossing roller and a pressure roller and glue is applied thereon. The third ply is then glued to the first ply and second ply by passing the three plies through a nip between the decoration embossing roller and a marrying roller.

The aim of the present invention is to provide a method for manufacturing paper products with three or more plies that overcomes the drawbacks of the cited prior art.

Within the scope of this aim, an object of the invention is to provide a product with three or more plies in which the middle ply or plies are glued to the outer plies without smudging.

This aim and these objects, as well as others that will become better apparent hereinafter, are also achieved by a method for manufacturing a paper product with three or more plies, according to claim 1.

According to embodiments disclosed herein, the method comprises the steps of:
a) passing a first outer ply through a first steel embossing roller, which acts together with a first rubber roller, creating a first set of protrusions and a second set of protrusions; said protrusions of the second set are higher than said protrusions of the first set;
b) passing said first outer ply and a middle ply, which has not yet been embossed, through a second rubber roller, which acts on said two plies with less pressure than said first rubber embossing roller, so that said plies reach a subsequent gluing step in an already nested state;
c) gluing said plies by means of a cliché roller;
d) embossing a second outer ply by means of a second steel embossing roller, which acts together with a third rubber roller;
e) passing all of said plies through a fourth mating roll.

This aim and these other objects that will become better apparent hereinafter are achieved by a paper product with three or more plies according to claim 9. According to embodiments disclosed herein the method comprises a first outer embossed ply, a second outer embossed ply and an embossed middle ply; said first outer embossed ply has a first set of protrusions and a second set of protrusions, obtained by means of a first embossing step; said protrusions of the second set are higher than said protrusions of the first set; said second set of protrusions corresponds to a set of intermediate protrusions provided on said middle ply during a second embossing operation; said first outer ply and said middle ply are glued at said second sets of protrusions; said second outer ply has a first set of protrusions obtained in a first step of embossing of said second outer ply; said first outer ply and said middle ply are mated to said second outer ply by lamination.

Embodiments of the method and of the product according to the invention are set forth in the dependent claims.

Further characteristics and advantages will become better apparent from the description of preferred but not exclusive embodiments of the invention, illustrated by way of nonlimiting example in the accompanying drawings, wherein:
Figure 1 is a sectional view of a three-ply paper product, manufactured according to the invention;
Figure 2 is a schematic view of the system for manufacturing the product of figure 1;
Figure 3 is a sectional view of a four-ply paper product, manufactured according to the invention;
Figure 4 is a schematic view of the apparatus for manufacturing the product of figure 3;
Figure 5 is a sectional view of another four-ply product, according to the invention;
Figure 6 is a schematic view of the apparatus for manufacturing the product of figure 5;
Figure 7 is a sectional view of a five-ply paper product, according to the invention;
Figure 8 is a schematic view of the apparatus for manufacturing the product of figure 7.

With reference to the cited figures, a paper product with three or more plies according to the invention, generally designated by the reference numeral 1, comprises a first outer embossed ply 2, a second outer embossed ply 3 and an embossed middle ply 4.

The first outer embossed ply 2 has a first set of protrusions 21 and a second set of protrusions 22 obtained by means of a first embossing step.

Preferably, the protrusions of the second set 22 are higher than the protrusions of the first set 21. The difference in height can be from 0.05 mm up to 1 mm.

The second set of protrusions 22 corresponds to a set of intermediate protrusions 42 which are provided on the middle ply 4 during a second operation of second embossing of the first outer ply 2.

The first outer ply 2 and the middle ply 4 are glued at their second set of protrusions 22 and 42.

The second outer ply 3 has a first set of protrusions 31, which are obtained in a first step of embossing of the second outer ply.

The first outer ply 2 and the middle ply 4 are mated to the second outer ply 3 by lamination.

The method for manufacturing the paper product 1 comprises passing the first outer ply through a first steel embossing roller 10, which acts together with a first rubber roller 11, creating the first and second sets of protrusions 21 and 22.

The first outer ply 2 and the middle ply 4, which is not yet embossed, then pass through a second rubber roller 12, which acts on the two plies 2 and 4 with less pressure than the first rubber embossing roller 11, so that the plies 2 and 4 arrive at lamination, or at gluing, already nested, preventing possible slippages, which in the case of colored glue would cause esthetically unpleasant smudges.

The gluing step is performed by means of a cliché roller 13, which is part of an applicator 14.

The second outer ply 3 is embossed by means of a second steel embossing roller 15, which acts together with a third rubber roller 16, creating the protrusions 31.

All the plies then pass through a fourth mating roller 17 where they are joined by lamination, producing the final paper product 1.

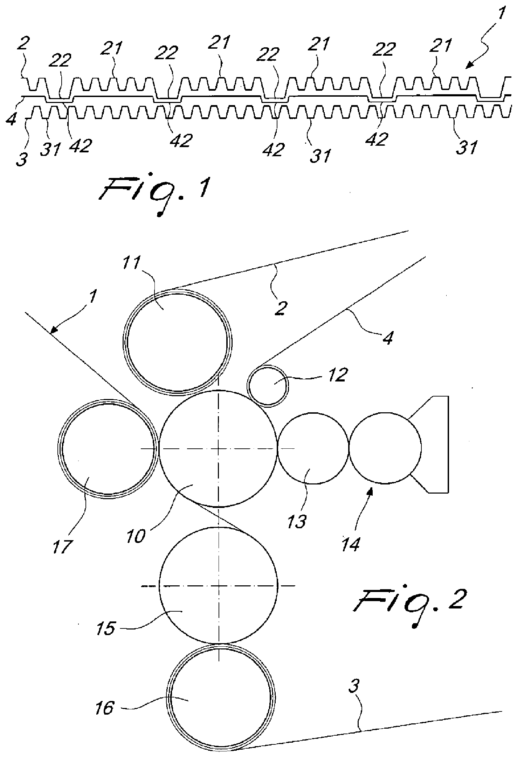

The embodiment shown in Figures 1 and 2 illustrates a nested assembly, which joins the first two plies 2 and 4 in register on the first steel roller 10 without being in register with the second steel roller 15, i.e. with a random or "DERL" registration.

The method according to the present invention may also comprise the two steel rollers 10 and 15 in register, "pin to pin".

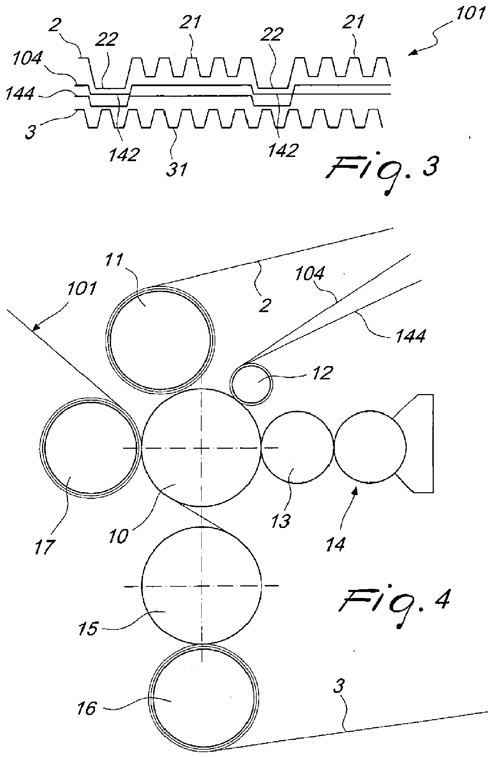

Figures 3 and 4 illustrate a method for manufacturing a four-ply paper product, designated by the reference numeral 101.

The paper product 101 is constituted by a first outer embossed ply 2, a second outer embossed ply 3, a first middle ply 104 and a second middle ply 144.

The first outer embossed ply 2 has a first set of protrusions 21 and a second set of protrusions 22 obtained by means of a first embossing step.

Preferably, the protrusions of the second set 22 are higher than the protrusions of the first set 21. The difference in height can be from 0.05 mm to 1 mm.

The second set of protrusions 22 corresponds to a set of intermediate protrusions 142 provided on the middle plies 104 and 144 during a second embossing operation.

The first outer ply 2 and the first middle ply 104 are glued at their second set of protrusions 22 and 142.

The second outer ply 3 has the first set of protrusions 31, obtained in a first step of embossing of the second outer ply.

The first outer ply 2 and the intermediate plies 104 and 144 are mated to the second outer ply 3 by lamination.

The method for manufacturing the paper product 101 comprises passing the first outer ply through a first steel embossing roller 10, which acts together with a first rubber roller 11, creating the first and second sets of protrusions 21 and 22.

The first outer ply 2 and the two intermediate plies 104 and 144, not yet embossed, then pass through a second rubber roller 12, which acts on the three plies 2, 104 and 144 with less pressure than the first rubber embossing roller 11, so that the plies 2, 104 and 144 arrive at lamination, or at gluing, already nested, preventing possible slippages which, in the case of colored glue, would cause esthetically unpleasant smudges.

The gluing step is performed by means of a cliché roller 13, which is part of an applicator unit 14.

The second outer ply 3 is embossed by means of a second steel embossing roller 15, which acts together with a third rubber roller 16, creating the protrusions 31.

All the plies then pass through a fourth rubber roller 17 where they are joined by lamination, producing the final paper product 101.

The embodiment shown in Figures 3 and 4 represents a "nested" assembly, which joins the first three plies 2, 104 and 144 in register on the first steel roller 10 without being in register with the second steel roller 15, i.e. with a random or "DERL" registration.

The method according to the present invention may also comprises the two steel rollers 10 and 15 in register, "pin to pin".

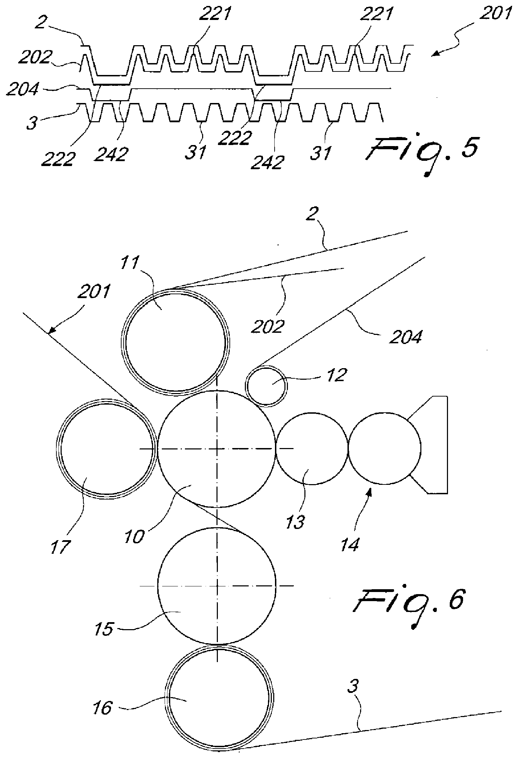

Figures 5 and 6 illustrate a method for manufacturing a four-ply paper product, designated by the reference numeral 201.

The paper product 201 is constituted by a first outer embossed ply 2, a second outer embossed ply 3, a first embossed middle ply 202 and a second embossed middle ply 204.

The first outer embossed ply 2 and the first middle ply 202 have a first set of protrusions 221 and a second set of protrusions 222 obtained by means of a first embossing step.

Preferably, the protrusions of the second set 222 are higher than the protrusions of the first set 221. The difference in height can be from 0.05 mm to 1 mm.

The second set of protrusions 222 corresponds to a set of protrusions 242 provided on the second middle ply 204 during a second embossing operation.

The first outer ply 2, the first middle ply 202 and the second middle ply 204 are glued at their second sets of protrusions 222 and 242.

The second outer ply 3 has a first set of protrusions 31 obtained in a first step of embossing of the second outer ply.

The first outer ply 2 and the intermediate plies 202 and 204 are mated to the second outer ply 3 by lamination.

The method for manufacturing the paper product 201 comprises passing the first outer ply 2 and the first middle ply 202 through a first steel embossing roller 10, which acts together with a first rubber roller 11, creating the first and second sets of protrusions 221 and 222.

The first outer ply 2 mated to the first middle ply 202 and the second middle ply 204, which has not yet been embossed, then pass through a second rubber roller 12, which acts on the three plies 2, 202 and 204 with less pressure than the first rubber embossing roller 11, so that the plies 2, 202 and 204 arrive at lamination, or at gluing, already nested, preventing possible slippages which, in the case of colored glue, would cause esthetically unpleasant smudges.

The gluing step is performed by means of a cliché roller 13, which is part of an applicator 14.

The second outer ply 3 is embossed by means of a second steel embossing roller 15, which acts together with a third rubber roller 16, creating the protrusions 31.

All the plies then pass through a fourth rubber roller 17 where they are joined by lamination, producing the final product 201.

The embodiment shown in Figures 5 and 6 illustrates a nested assembly which joins the first three plies 2, 202 and 204 in register on the first steel roller 10 without being in register with the second steel roller 15, i.e. with a random or "DERL" registration.

The method according to the present invention may also comprise the two steel rollers 10 and 15 in register, "pin to pin".

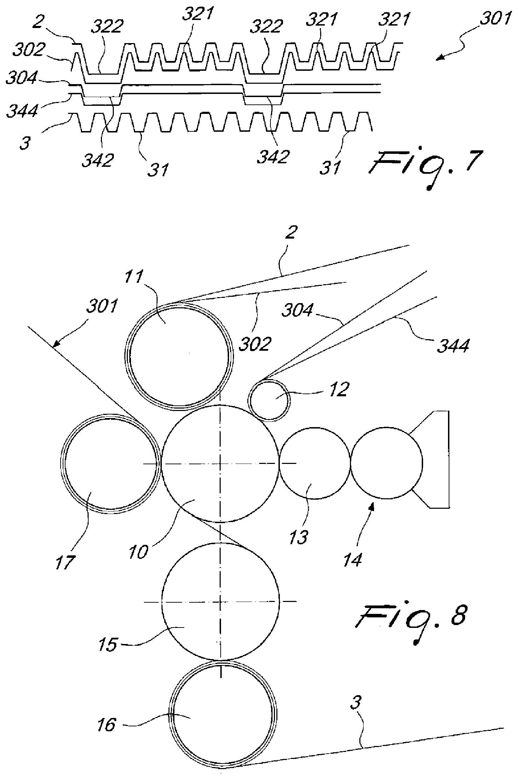

Figures 7 and 8 illustrate a method for manufacturing a five-ply paper product, designated by the reference numeral 301.

The paper product 301 is constituted by a first outer embossed ply 2, a second outer embossed ply 3, a first embossed middle ply 302, a second embossed middle ply 304 and a third embossed middle ply 344.

The first outer embossed ply 2 and the first middle ply 302 have a first set of protrusions 321 and a second set of protrusions 322 obtained by means of a first embossing step.

Preferably, the protrusions of the second set 322 are higher than the protrusions of the first set 321. The difference in height can be from 0.05 mm up to 1 mm.

The second set of protrusions 322 corresponds to a set of protrusions 342 provided on the second middle ply 304 and on the third middle ply 344 during a second embossing operation.

The first outer ply 2, the first middle ply 302, the second middle ply 304 and the third middle ply 344 are glued at their second sets of protrusions 322 and 342.

The second outer ply 3 has a first set of protrusions 31 obtained in a first step of embossing of the second outer ply.

The first outer ply 2 and the intermediate plies 302, 304 and 244 are mated to the second outer ply 3 by lamination.

The method for manufacturing the paper product 301 comprises passing the first outer ply 2 and the first middle ply 302 through a first steel embossing roller 10, which acts together with a first rubber roller 11, creating the first and second sets of protrusions 321 and 322.

The first outer ply 2 mated to the first middle ply 302 and the second middle ply 304 mated to the third middle ply 344, which are not yet embossed, then pass through a second rubber roller 12, which acts on the four plies 2, 302, 304 and 344 with less pressure than the first rubber embossing roller 11, so that the plies 2, 302, 304 and 344 arrive at lamination, or at gluing, already nested, preventing possible slippages, which in the case of colored glue, would give rise to esthetically unpleasant smudges.

The gluing step is performed by means of a cliché roller 13, which belongs to an applicator unit 14.

The second outer ply 3 is embossed by means of a second steel embossing roller 15, which acts together with a third rubber embossing roller 16, creating the protrusions 31.

All the plies then pass through a fourth rubber roller 17 where they are joined by lamination, producing the final paper product 301.

The embodiment shown in Figures 7 and 8 illustrates a nested assembly, which joins the first four plies 2, 302, 304 and 344 in register on the first steel roller 10 without being in register with the second steel roller 15, i.e. with a random or "DERL" registration.

The method according to the present invention may also comprise the two steel rollers 10 and 15 in register, "pin to pin".

In practice it has been found that the invention achieves the intended aim and objects, providing a paper product with three or more plies in which one of the two groups of embossing rollers has a second rubber embossing roller which acts on the two plies, the outer one and the middle one, with less pressure than the main rubber embossing roller.

The joining of plies with the production method according to the present invention is achieved by using embossing and lamination assemblies of the "pin to pin", "DERL", embossing-gluing type.

This application claims the priority of Italian Patent Application No. MI2010A000116, filed on January 28, 2010, the subject matter of which is incorporated herein by reference.

The following clauses define aspects of the invention disclosed herein:
1. A paper product with three or more plies, **characterized in that** it comprises a first outer embossed ply, a second outer embossed ply and an embossed middle ply; said first outer embossed ply has a first set of protrusions and a second set of protrusions, obtained by means of a first embossing step; said protrusions of the second set are higher than said protrusions of the first set; said second set of protrusions corresponds to a set of intermediate protrusions provided on said middle ply during a second embossing operation; said first outer ply and said middle ply are glued at said second sets of protrusions; said second outer ply has a first set of protrusions obtained in a first step of embossing of said second outer ply; said first outer ply and said middle ply are mated to said second outer ply by lamination.
2. The paper product according to clause 1, **characterized in that** said middle ply constitutes a first middle ply and said product comprises a second middle ply which is mated to said first middle ply; said second middle ply comprises a set of intermediate protrusions, which correspond to said intermediate protrusions of said first middle ply and are obtained by means of said second embossing.
3. The paper product according to clause 1, **characterized in that** said middle ply constitutes a second middle ply; said product comprises a first middle ply which is mated to said first outer ply, said first middle ply comprises a first set of protrusions, which correspond to said first set of protrusions of said first outer ply, and a second set of protrusions, obtained by means of said first embossing step; said second set of protrusions of said first middle ply corresponds to said second set of protrusions of said first outer ply.
4. The paper product according to one or more of the preceding clauses, **characterized in that** said middle ply constitutes a second middle ply; said product comprises a first middle ply which is mated to said first outer ply, said first middle ply comprises a first set of protrusions, which correspond to said first set of protrusions of said first outer ply, and a second set of protrusions obtained by means of said first embossing step, said second set of protrusions of said first middle ply correspond to said second set of protrusions of said first outer ply; said product comprises a third ply, which is mated to said first intermediate ply; said third middle ply comprises a set of intermediate protrusions, which correspond to said intermediate protrusions of said first middle ply and are obtained by means of said second embossing.
5. A method for manufacturing a paper product with three or more plies, **characterized in that** it comprises the steps of:
   a) passing a first outer ply through a first steel embossing roller, which acts together with a first rubber roller, creating a first set of protrusions and a second set of protrusions; said protrusions of the second set are higher than said protrusions of the first set;
   b) passing said first outer ply and a middle ply, which has not yet been embossed, through a second rubber roller, which acts on said two plies with less pressure than said first rubber embossing roller, so that said plies reach a subsequent gluing step in an already nested state;
   c) gluing said plies by means of a cliché roller;
   d) embossing a second outer ply by means of a second steel embossing roller, which acts together with a third rubber roller;
   e) passing all of said plies through a mating roll.
6. The method according to clause 5, **characterized in that** said step b) comprises the passage of two mated middle plies.
7. The method according to clause 5, **characterized in that** said step a) comprises passing said first outer ply mated to a first middle ply.
8. The method according to clause 5, **characterized in that** said step a) comprises passing said first outer ply mated to a first middle ply and said step b) comprises passing a second and a third middle ply which are mated.
9. The method according to one or more of clauses 5-8, **characterized in that** said steps a) and d) are provided without said first steel roller being in register with said second steel roller, i.e. with a random or "DERL" registration.
10. The method according to one or more of clauses 5-8, **characterized in that** said steps a) and d) are provided with said first steel roller in register with said second steel roller, with a "pin to pin" system.

## Claims

1. A method for manufacturing a paper product (1) comprising at least three plies, the method comprising the steps of:
- performing a first embossing step on a first outer ply (2), forming thereon a first set of protrusions (21) and a second set of protrusions (22); wherein the protrusions (22) of the second set are higher than the protrusions (21) of the first set;
- performing a second embossing step on a middle ply (4) to generate a set of intermediate protrusions (42) thereon; wherein said second set of protrusions (22) of the first outer ply (2) corresponds to said set of intermediate protrusions (42) provided on said middle ply (4);
- gluing said middle ply (4) and said first outer ply (2) at said second set of protrusions (22);
- performing a further embossing step on a second outer ply (3), forming thereon a respective first set of protrusions (31);
- mating said middle ply (4) and said first outer ply (2) to said second outer ply (3) by lamination.

2. A method for manufacturing a paper product with three or more plies, **characterized in that** it comprises the steps of:
a) passing a first outer ply (2) between a first steel embossing roller (10) and a first rubber roller (11), the first steel embossing roller (10) acting together with the first rubber roller (11), creating a first set of protrusions (21) and a second set of protrusions (22); the protrusions (22) of the second set being higher than the protrusions (21) of the first set;
b) passing said first outer ply (2) and a middle ply (4), which has not yet been embossed, between a second rubber roller (12) and the first steel embossing roller (10), the second rubber (12) roller acting on said first outer ply (2) and said middle ply (4) with less pressure than said first rubber roller (11);
c) gluing said intermediate ply (4) and said first outer ply (2) by means of a cliché roller (13);
d) embossing a second outer ply (3) by means of a second steel embossing roller (15), which acts together with a third rubber roller (16);
e) mating the first outer ply (2), the second outer ply (3) and the intermediate ply (4) together.

3. The method according to claim 2, **characterized in that** said step b) comprises the passage of two mated middle plies.

4. The method according to claim 2, **characterized in that** said step a) comprises passing said first outer ply mated to a first middle ply.

5. The method according to claim 2, **characterized in that** said step a) comprises passing said first outer ply mated to a first middle ply and said step b) comprises passing a second and a third middle ply which are mated.

6. The method according to one or more of claims 2 to 5, wherein the step e) of mating the first outer ply, the second outer ply and the intermediate ply together include the step of passing all of said plies between the first embossing roll and a fourth mating roll.

7. The method according to claim 6, **characterized in that** said steps a) and d) are provided without said first steel roller being in register with said second steel roller, i.e. with a random or "DERL" registration.

8. The method according to one or more of claims 2-5, **characterized in that** said first steel roller and said second steel roller are in register "pin to pin".

9. A paper product with at least three plies, comprising a first outer embossed ply (2), a second outer embossed ply (3), and an embossed middle ply (4); said first outer embossed ply (2) has a first set of protrusions (21) and a second set of protrusions (22), obtained by means of a first embossing step; said protrusions (22) of the second set are higher than said protrusions (21) of the first set; said second set of protrusions (22) corresponds to a set of intermediate protrusions (42) provided on said middle ply (4) during a second embossing operation; said first outer ply (2) and said middle ply (4) are glued at said second set of protrusions (22); said second outer ply (3) has a first set of protrusions (31) obtained in a first step of embossing of said second outer ply (3); said first outer ply (2) and said middle ply (4) are mated to said second outer ply (3) by lamination.

10. The paper product according to claim 1, **characterized in that** said middle ply constitutes a first middle ply and said product comprises a second middle ply which is mated to said first middle ply; said second middle ply comprises a set of intermediate protrusions, which correspond to said intermediate protrusions of said first middle ply and are obtained by means of said second embossing.

11. The paper product according to claim 1, **characterized in that** said middle ply constitutes a second middle ply; said product comprises a first middle ply which is mated to said first outer ply, said first middle ply comprises a first set of protrusions, which correspond to said first set of protrusions of said first outer ply, and a second set of protrusions, obtained by means of said first embossing step; said second set of protrusions of said first middle ply corresponds to said second set of protrusions of said first outer ply.

12. The paper product according to one or more of the preceding claims, **characterized in that** said middle ply constitutes a second middle ply; said product comprises a first middle ply which is mated to said first outer ply, said first middle ply comprises a first set of protrusions, which correspond to said first set of protrusions of said first outer ply, and a second set of protrusions obtained by means of said first embossing step, said second set of protrusions of said first middle ply correspond to said second set of protrusions of said first outer ply; said product comprises a third ply, which is mated to said first intermediate ply; said third middle ply comprises a set of intermediate protrusions, which correspond to said intermediate protrusions of said first middle ply and are obtained by means of said second embossing.
